# EUROPEAN PATENT APPLICATION

(11) **EP 4 368 648 A1**
(43) Date of publication of application: **15.05.2024**
(21) Application number: 22206240.8
(22) Date of filing: 08.11.2022
(51) Int. Cl.: C08G 18/28, C08G 18/40, C08G 18/42, C08G 18/62, C08G 18/73, C08G 18/75, C08G 18/79, C08G 18/80, C09D 175/04, C09D 175/06

(54) **ALKOXYSILANE-BASED CROSSLINKING AGENT**

(71) Applicant: BASF Coatings GmbH, 48165 Münster (DE)
(72) Inventor: WINSBERG, Jan, 48165 Münster (DE); WEIHER, Christian, 48165 Münster (DE); KLEIN, Guenter, 48165 Münster (DE); HOMANN, Karin, 48165 Münster (DE); AUSTRUP, Berthold, 48165 Münster (DE); WENKING, Ulrike, 48165 Münster (DE)
(74) Representative: Steffan & Kiehne Patentanwälte PartG mbB

(57) **Abstract**

The invention relates to a crosslinking agent (X) of formula [R-(C=O)-NH]_{z}R^{org}. wherein R^{org} is an organic residue and z = 2 to 9, and R is selected from group consisting of alkoxysilane groups containing groups of formulae (II) and (III) and isocyanate blocking groups, formula (II) being N[R¹SiR³ₘ(OR⁵)₃₋ₘ][R²SiR⁴ₙ(OR⁶)₃₋ₙ] wherein R¹ and R² are independently from each other selected from linear, branched and cyclic alkylene groups having 1 to 10 carbon atoms, R³ and R⁴ are independently from each other selected from linear, branched and cyclic alkyl groups having 1 to 10 carbon atoms, R⁵ and R⁶ are independently selected from alkyl residues containing 2, 3 or 4 carbon atoms, and n and m are independently of each other 0, 1 or 2; and formula (III) being NR¹⁰[R⁷SiR⁸ₓ(OR⁹)₃₋ₓ] wherein R⁷ is selected from linear, branched and cyclic alkylene groups having 1 to 10 carbon atoms, R⁸ is selected from linear, branched and cyclic alkyl groups having 1 to 10 carbon atoms, R⁹ is selected from alkyl residues containing 2, 3 or 4 carbon atoms, R¹⁰ is selected from linear, branched and cyclic alkylene groups having 1 to 10 carbon atoms and x being 0, 1 or 2; and isocyanate blocking groups R^{b} being formally derived from isocyanate blocking agents of formula H-R^{b} by formal removal of H at the atom of residue R^{b}, which is bound to the carbon of the C=O group in formula (I); with the proviso that on average at least 15 mole-% of the entirety of residues R in formula (I) are residues of formula (II). The invention further relates to the preparation of the crosslinkers (X) and their use in curable compositions comprising substances which are reactive with hydrolysable silane groups.

## Description

### FIELD OF THE INVENTION

The present invention relates to alkoxysilane based crosslinking agents, particularly for use in one-pack coating materials, such as one-pack clear coat materials comprising a hydroxy-functional polymeric binder, such as preferably used in automotive coating. The invention further relates to a method of preparing such crosslinking agents and their use in curable compositions, such as coating materials.

### BACKGROUND OF THE INVENTION

There is an ongoing need for crosslinking agents, which do not contain free isocyanate groups, and which are particularly suitable to perform in self-crosslinking reactions as well as crosslinking reactions with hydroxy-functional substances, particularly hydroxy functional polymers at elevated temperatures.

There exist application fields, particularly in the coatings industry, where curable ready-to-use materials are desired, i.e., materials, which can be used without the need for mixing with a crosslinking agent after storage and prior to use.

Such products make typically use of blocked polyisocyanates and/or aminoplast resins as crosslinking agents (i.e., crosslinkers). However, such crosslinking agents often possess properties which just allow for a sufficient crosslinking, but are not apt to solve problems such as employing an excellent mechanical impact resistance such as a scratch resistance to the cured materials. Besides such general purpose crosslinkers which can be used in many different coating materials and perform good in many different layers of a multilayer coating, there is a desire to provide new crosslinking agents which do not only serve to crosslink hydroxy functional substances, but which provide special properties to the cured material.

Therefore, the inventors of the present invention where in search for a niche product rather than a general purpose crosslinker. The desired crosslinker, should be apt to be stored in mixtures with the material to be cured without pre-mature curing, it should possess the ability to crosslink the crosslinkable material at an elevated temperature, preferably in the same temperature range as used for typical standard one-pack coating compositions. Moreover, it should be apt to be employed in the highly challenging field of automotive coating, preferably in multilayer coatings as the outermost coating and to enhance the properties required by such coating layers, such as possessing an excellent mechanical impact resistance, particularly an excellent scratch and mar resistance.

In automotive coatings, clearcoat coatings are typically the outermost coating of coated substrates, particularly multilayer coated substrates. Therefore, they are prone to all environmental influences such as weathering and mechanical impacts. One kind of a mechanical impact is the contact with abrasive material, such as brushes used for cleaning the coated substrates or sand from the environment. This kind of mechanical impact leads to scratches and strongly reduces the gloss of the coatings significantly. Thus, there is an ongoing need for improved scratch-resistant clearcoat coatings.

For coatings formed from two-pack coating materials (also called two-component coating materials) two major approaches to improve scratch resistance exist.

The first approach is the incorporation of surface-modified silica nano-particles that migrate to the clearcoat-air interface in the flash-off phase, i.e., the phase after application of the clearcoat to the substrate in which some of the solvents contained in the coating layer evaporate, but the layer is no fully dried, nor substantially cured. The migration of the silica nanoparticles to the clearcoat-air surface leads to an enrichment of such particles at the surface and surface near area of the coating layer and after curing such layer exhibits an improved scratch resistance. Detrimental in this approach is that strong or long abrasive impact on the surface may lead to a partial loss of the silica nanoparticles in the outermost part of the clearcoat layer, which consequently is accompanied by a loss of the scratch resistance effect.

A second approach makes use of silane-modified polymers or oligomers as crosslinking substances, to form a hybrid clearcoat matrix featuring a thermoset clearcoat matrix marbled with silica nanoclusters. This approach is preferred, since the scratch-resistance is more durable and more weather resistant compared to standard two-pack clearcoats.

The problem with two-pack compositions as such is that they require the separate storage of at least two parts of the final coating material, namely the so-called masterbatch composition comprising crosslinkable polymers and the hardener composition comprising a crosslinker. Neither the masterbatch composition, nor the hardener composition themselves are apt to form durable coatings, however, directly upon mixing a reaction between masterbatch and hardener starts, resulting in a limitation of pot life. With other words the final two-pack coating materials are not storage stable. Moreover, the crosslinking agents used in such compositions are typically free polyisocyanates, the handling of which underlies special safety requirements.

Thus, transferring the favorable second approach of improving scratch resistance by some sort of crosslinking agent as discussed above from two-pack coating materials to one-pack coating materials was not yet technically feasible because the resulting one-pack compositions where either not long-term stable or not reactive enough to sufficiently crosslink under baking conditions of the coating material to result in an improvement of the properties of the corresponding coatings, particularly clearcoats.

Therefore, the present invention aims to provide a crosslinking agent, which can particularly be used in one-pack coating materials without causing a pre-mature curing reaction during storage of such coating materials and which can completely or partially substitute other crosslinking agents such as blocked polyisocyanates and/or aminoplast resins in one-pack compositions or which can be used to supplement existing one-pack coating compositions, by using this crosslinking agent as a supplemental additive to provide an increased scratch resistance and/or gloss retention after mechanical stress. Further the crosslinking agent should be apt to self-crosslink by providing reactive groups which can react with the same kind of groups under formation of inorganic Si-O-Si clusters.

### SUMMARY OF THE INVENTION

The aims and objects described above are achieved by the subject matter claimed in the claims and also by the preferred embodiments of the respective subject matter which is described hereinafter.

A first subject matter of the present invention is therefore a crosslinking agent (X) of general formula (I) 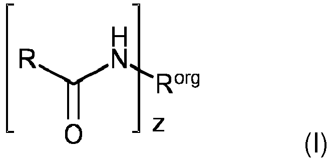 wherein
R^{org} is an organic residue and z = 2.0 to 9.9, and
R is selected from the group consisting of alkoxysilane groups containing
groups of formulae (II) and (III) and isocyanate blocking groups, formula (II) being 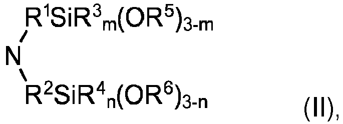 wherein
   R¹ and R² are independently from each other selected from linear, branched, and cyclic alkylene groups having 1 to 10 carbon atoms,
   R³ and R⁴ are independently from each other selected from linear, branched, and cyclic alkyl groups having 1 to 10 carbon atoms,
   R⁵ and R⁶ are independently selected from alkyl residues containing 2, 3 or 4 carbon atoms, and
   n and m are independently of each other 0, 1 or 2;
formula (III) being 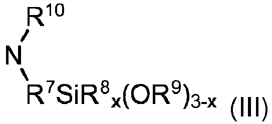 wherein
   R⁷ is selected from linear, branched, and cyclic alkylene groups having 1 to 10 carbon atoms,
   R⁸ is selected from linear, branched, and cyclic alkyl groups having 1 to 10 carbon atoms,
   R⁹ is selected from alkyl residues containing 2, 3 or 4 carbon atoms,
   R¹⁰ is selected from H and linear, branched, and cyclic alkyl groups having 1 to 10 carbon atoms and
   x being 0, 1 or 2; and
isocyanate blocking groups R^{b} being formally derived from isocyanate blocking agents of formula H-R^{b} by formal removal of H at the atom of residue R^{b},
which is bound to the carbon of the C=O group in formula (I);
with the proviso that on average at least 15 mole-% of the entirety of residues R in formula (I) are residues of formula (II).

The above-specified crosslinking agents (X) are hereinafter also referred to as crosslinking agents (X) of the invention and accordingly are a subject of the present invention.

A second subject matter of the present invention is a method of preparing the crosslinking agent (X) of the present invention by reacting di- or polyisocyanates of formula R^{org}(NCO)_{z}, wherein R^{org} and z are defined as for crosslinking agent (X) of the invention, with
i. at least one secondary amine of formula (IIa): 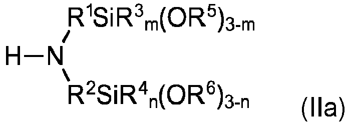 wherein R¹, R², R³, R⁴, R⁵, R⁶, m and n are defined as for crosslinking agent (X) of the invention;
   and in case that not all of the z isocyanate groups are reacted with a secondary amine of formula (IIa), the residual isocyanate groups are reacted with
ii. at least one amine of formula (IIIa): 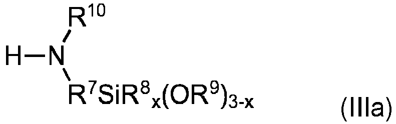 wherein R⁷, R⁸, R⁹, R¹⁰ and x are defined as for crosslinking agent (X) of the invention; and/or
iii. at least one isocyanate blocking agent H-R^{b} as defined for crosslinking agent (X) of the invention;
with the proviso that on average at least 15 mole-% of the entirety of the z isocyanate groups of the diisocyanates or polyisocyanates of formula R^{org}(NCO)_{z} are reacted with compounds of formula (IIa).

The above-specified method of preparing a crosslinking agent (X) of the invention is hereinafter also referred to as preparation method of the invention.

Another subject matter of the present invention is the use of the crosslinking agents (X) of the present invention in curable compositions comprising substances which are reactive with hydrolysable silane groups.

The afore-mentioned use is hereinafter also referred to as use of the invention.

### DETAILED DESCRIPTION

The measurement methods to be employed in the context of the present invention for determining certain characteristic variables can be found in the Examples section. Unless explicitly indicated otherwise, these measurement methods are to be employed for determining the respective characteristic variable. Where reference is made in the context of the present invention to an official standard without any indication of the official period of validity, the reference is implicitly to the latest version of the standard that is valid on the filing date, or, in the absence of any valid version at that point in time, to the last valid version.

In accordance with the "Compendium of Polymer Terminology and Nomenclature" (IUPAC Recommendations 2008; RSCPublishing; ISBN: 978-0-85404-491-7) it is distinguished between molecules and substances; the substances being composed of molecules. As used herein a monomer is a substance composed of monomer molecules, an oligomer is a substance composed of oligomer molecules and a polymer is a substance composed of polymer molecules (macro molecules). Monomer molecules can undergo polymerization, thereby contributing constitutional units to the essential structure of a macromolecule. Oligomer molecules are molecules of intermediate relative molecular mass, the structure of which essentially comprises a small plurality of units derived (actually or conceptually) from molecules of lower relative molecular mass. Polymer molecules, i.e., macromolecules, are molecules having a high relative molecular mass, which essentially comprises the multiple repetition of units derived (actually or conceptionally) from molecules of low relative molecular mass. For the present invention it is not necessary to distinguish between oligomers and polymers. Unlike single molecules, substances, which by definition consist of a plurality of molecules, do not necessarily have an exact molecular weight. If a substance, particularly a monomer consists of a plurality of identical molecules, the molecular weight of such substance is identical to the molecular weight of the single molecules, i.e., the number-average molecular weight Mₙ and weight-average molecular weight M_{w} of the substance is identical (Mₙ = M_{w}). However, if the substance is an oligomer or even a polymer, the single oligomer molecules forming the oligomer or the macromolecules forming the polymer may differ in their molecular weights, e.g., due to different numbers of monomeric units constituting the oligomer molecules or macromolecules. Thus, in case of oligomers and polymers the so-called polydispersity PD = M_{w}/Mₙ might be larger than 1. Herein, particularly film-forming polymers, such as hydroxy-functional polymers and the crosslinking agents (X), but also other oligomeric and polymeric ingredients are considered to be substances and thus to possess number-average molecular weights Mₙ and weight-average molecular weights M_{w} which may differ from each other. Thus, in case of the presence of a number of functional groups in substances, percentage of functional groups in substances or parameters characterizing such substances, as, e.g., hydroxyl numbers, such numbers, percentages and parameters are also number averages over the whole population of single molecules constituting the respective substance.

Preferably, oligomers are considered herein as polymers having a number-average molecular weight (Mₙ) in the range from 300 to 3000 g/mol as determined by gel permeation chromatography with tetrahydrofuran as an eluent using a polystyrene standard, ISO 13885-1: Measure according to 2008.

### Crosslinking Agent (X)

The crosslinking agent (X) of the present invention has the following general formula (I) 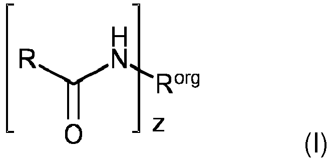 wherein
R^{org} is an organic residue and z = 2.0 to 9.0, preferably 2.0 to 6.0, and
R is selected from the group consisting of alkoxysilane groups containing groups of formulae (II) and (III) and isocyanate blocking groups, formula (II) being 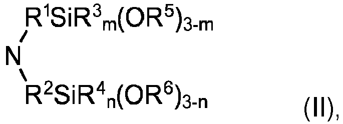 wherein
   R¹ and R² are independently from each other selected from linear, branched, and cyclic alkylene groups having 1 to 10 carbon atoms,
   R³ and R⁴ are independently from each other selected from linear, branched, and cyclic alkyl groups having 1 to 10 carbon atoms,
   R⁵ and R⁶ are independently selected from alkyl residues containing 2, 3 or 4 carbon atoms, and
   n and m are independently of each other 0, 1 or 2;
formula (III) being 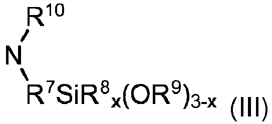 wherein
   R⁷ is selected from linear, branched, and cyclic alkylene groups having 1 to 10 carbon atoms,
   R⁸ is selected from linear, branched, and cyclic alkyl groups having 1 to 10 carbon atoms,
   R⁹ is selected from alkyl residues containing 2, 3 or 4 carbon atoms,
   R¹⁰ is selected from H and linear, branched, and cyclic alkyl groups having 1 to 10 carbon atoms and
   x being 0, 1 or 2; and
isocyanate blocking groups R^{b} being formally derived from isocyanate blocking agents of formula H-R^{b} by formal removal of H at the atom of residue R^{b}, which is bound to the carbon of the C=O group in formula (I);
with the proviso that on average at least 15 mole-% of the entirety of residues R in formula (I) are residues of formula (II).

Such crosslinking agents are particularly suitable to crosslink the hydroxy groups of hydroxy functional substances, such as monomers, oligomers, and polymers, but also hydrolysable silane groups in self-crosslinking reactions or in crosslinking hydrolysable silane group comprising monomers, oligomer and polymers which differ from the crosslinking agents (X) of the invention.

The crosslinking agents (X) should preferably not contain free isocyanate groups (NCO groups), i.e., the crosslinking agents (X) of the invention should preferably be isocyanate-free. If some NCO containing starting compounds used in the preparation of the crosslinking agents (X) are still contained in the crosslinking agents (X), the content of NCO groups should preferably not exceed 1.0 wt.-%, more preferred the content should be in the range from 0 to 0.7 wt.-%, even more preferred from 0 to 0.5 wt.-%, and most preferred from 0 to 0.3 wt.-% based on the total weight of the crosslinking agent (X).

The crosslinking agents (X) of general formula (I) contain z = 2 to 9 R(C=O)NH groups. The value of z is preferably selected by using a diisocyanate or polyisocyanates having z isocyanate groups (NCO groups) in the manufacture of the crosslinking agent (X) of general formula (I). Such diisocyanates or polyisocyanates R^{org}(NCO)_{z} are commercially available. However, the average number of NCO groups in such starting substances can be determined from their number-average molecular weights and their NCO content, both of which can be determined as described herein below.

### Organic residue R^{org}

The organic residue R^{org} are preferably monomeric, oligomeric, or polymeric, more preferably monomeric or oligomeric. The organic residues R^{org} can be aliphatic or aromatic. Herein, the term aliphatic residue or compound or group includes acyclic or cyclic (i.e., cycloaliphatic), saturated or unsaturated residues or compounds or groups, excluding aromatic residues or compounds or groups.

If the organic residue R^{org} is a monomeric organic residue R^{m} the value of z is preferably 2.0 to 4.0 or 2.0 to 3.0, more preferably R^{m} is the residue of a diisocyanate OCN-R^{m}-NCO (i.e., z = 2) from which the two isocyanate groups are formally removed. E.g., in case of hexamethylene diisocyanate (HDI), such residue R^{m} would be the hexamethylene residue, i.e., the residue between the two isocyanate groups. Such monomeric organic residues R^{m} can be aliphatic, including cycloaliphatic or aromatic organic residues, amongst which the aliphatic residues, i.e., linear, or branched or cyclic aliphatic residues are referred. Preferably the aliphatic, including cycloaliphatic or aromatic organic residues R^{m} are hydrocarbon residues. Even more preferred the monomeric organic residues R^{m} are aliphatic, including cycloaliphatic hydrocarbon residues.

Typical diisocyanates from which the two isocyanate groups are formally removed include 2,4-toluene diisocyanate, 2,6-toluene diisocyanate, diphenylmethane 4,4'-diisocyanate, diphenylmethane 2,4'-diisocyanate, p-phenylene diisocyanate, biphenyl diisocyanates, 3,3'-dimethyl-4,4'-diphenyl diisocyanate, tetramethylene 1,4-diisocyanate, hexamethylene 1,6-diisocyanate, 2,2,4-trimethylhexane 1,6-diisocyanate, isophorone diisocyanate (IPDI), ethylene diisocyanate, 1,12-dodecane diisocyanate, cyclobutane 1,3-diisocyanate, cyclohexane 1,3-diisocyanate, cyclohexane 1,4-diisocyanate, methylcyclohexyl diisocyanates, hexahydrotoluene 2,4-diisocyanate, hexahydrotoluene 2,6-diisocyanate hexahydrophenylene 1,3-diisocyanate, hexahydrophenylene 1,4-diisocyanate, perhydrodiphenylmethane 2,4'-diisocyanate, 1-isocyanato-4-[(4-isocyanatocyclohexyl)-methyl]-cyclohexane (H12-MDI; e.g., Desmodur^{®} W from Covestro AG), tetramethylxylyl diisocyanates (e.g., TMXDI^{®} from American Cyanamid), and mixtures of the aforementioned polyisocyanates.

If the organic residue R^{org} is an oligomeric organic residue R^{o}, it is preferably the residue of an oligomerization product of one or more diisocyanates from which after oligomerization the remaining isocyanate groups are formally removed, and the oligomerization product being selected from the group consisting of dimerization products, trimerization products, urethanization products, biuretization products and allophanatization products. Such oligomerization product comprises on average two or more free isocyanate groups and can be depicted as follows: R^{o}(NCO)ᵣ, with R^{o} being the oligomeric organic residue and r being 2.0 to 9.0, preferably r being 2.0 to 6.0, more preferred 2.3 to 4.0 and most preferred r being 2.5 to 3.5; R^{o} preferably comprises one or more groups selected from isocyanurate groups, iminooxadiazindion groups, urethane groups, biuret groups, uretdion groups and allophanate groups, most preferably it contains an isocyanurate group. The diisocyanates used to form such oligomerization products are the same as described in the previous section about monomeric organic residues R^{m}. Again, aliphatic, and cycloaliphatic diisocyanates are preferred monomers used in oligomerization. Most preferred oligomeric organic residues R^{o} are formed from one or more of 1,6-hexamethylenediisocyanate, isophorone diisocyanate and H12-MDI. Particularly preferred oligomerization products are trimerization products formed from diisocyanates. Preferably, oligomeric crosslinking agents (X) are considered herein as polymers having a number-average molecular weight in the range from 300 to 3000 g/mol. The molecular weights of number average (Mₙ) and weight average (M_{w}) of crosslinking agents (X) or any other oligomeric or polymeric substances disclosed herein are determined by gel permeation chromatography (GPC) with tetrahydrofuran as an eluent using a polystyrene standard, ISO 13885-1: Measure according to 2008. A styrene-divinylbenzene copolymer is used as the column material. By this method, it is also possible to measure polydispersity (ratio of weight average molecular weight (M_{w}) to number average molecular weight (Mₙ)).

If the organic residue R^{org} is a polymeric organic residue R^{P}, it is preferably the residue of an isocyanate group containing polymer from which the isocyanate groups are formally removed. Such polymer can be depicted as follows: R^{P}-(NCO)ₛ, wherein R^{P} is a polymeric organic residue and s being 2.0 to 9.0, preferably 3.0 to 7.0 and more preferred s being 3.0 to 6.0. Preferably the polymeric organic residues R^{P} are linear or branched, aliphatic or aromatic, most preferred aliphatic. Most preferably the polymeric organic residues R^{P} contain one or more groups selected from polyurethane groups, polyester groups, polyether groups and polyacrylate groups.

Amongst residues R^{m}, R^{o} and R^{p}, residues R^{m} and R^{o} are most preferred.

### Groups R

### Alkoxysilane groups containing groups of formula (II)

At least one of groups R, preferably at least two of groups R in formula (I) are alkoxylsilane containing groups of formula (II)

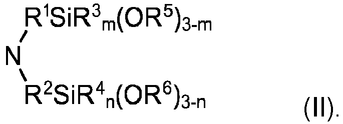

As already defined above, R¹ and R² are independently from each other selected from linear, branched and cyclic alkylene groups having 1 to 10 carbon atoms. Preferably the number of carbon atoms in R¹ and R² is 2 to 8, even more preferred 3 to 6 and most preferred 3, 4 and 5. Most preferably, R¹ and R² are linear alkylene groups having 3, 4 or 5, most preferably 3 carbon atoms, such as in (CH₂)₃ groups. In the present invention it is less preferred that R¹ and R² have only 1 carbon atom, since methylene groups typically lead to a higher reactivity and thus are less preferred with respect to storage stability of a one-pack coating material.

R³ and R⁴ are independently from each other selected from linear, branched and cyclic alkyl groups having 1 to 10 carbon atoms. Preferably the number of carbon atoms is 1 to 6, even more preferred 1 to 4 and most preferred 1, 2 or 3. Preferably R³ and R⁴ are selected from linear or branched alkyl groups.

R⁵ and R⁶ are independently selected from alkyl residues containing 2, 3 or 4 carbon atoms, preferably 2 or 3 and most preferred 2. The alkyl groups can be linear orf branched. Preferably the alkyl groups are selected from ethyl, n-propyl, i-propyl, n-butyl, i-butyl and t-butyl, even more preferred from ethyl, n-propyl, i-propyl and t-butyl, most preferred R⁵ and R⁶ are ethyl. In the present invention it was found that the best-balanced properties regarding storage stability on the one hand and reactivity on the other hand were found for R⁵ and R⁶ being ethyl.

Residues OR⁵ and OR⁶ participate in the crosslinking reaction with the hydroxy-functional polymers as well as in water- or moisture-induced self-crosslinking reactions as explained in more detail in the next paragraph. Generally, it can be stated that the reactivity of residues OR⁵ and OR⁶ in the crosslinking reactions decreases with an increasing number of carbon atoms in the residues R⁵ and R⁶. Thus, ethyl groups are more reactive than propyl groups, and propyl groups are more reactive than butyl groups.

The values for n and m are independently of each other 0, 1 or 2, preferably 0 or 1 and most preferred 0. The values for n and m determine the numbers of alkoxy groups bound to the silane. If m = 0, formula (II) contains an Si(OR⁵)₃ group and if n = 0, formula (II) contains an Si(OR⁶)₃ group. Preferably, at least one of n and m is 0. Even more preferred n and m are 0.

In the crosslinking reaction between the hydroxy groups of, e.g., a hydroxy-functional polymer selected from the group consisting of poly(meth)acrylic polymers, polyesters, polyurethanes and polyethers and the crosslinking agents (X) the following reaction occurs: Si-OR^{5/6} + HO-Polymer -> Si-O-Polymer + HO-R^{5/6}. This reaction is accompanied in the presence of water, preferably in form of moisture from the air, by a hydrolytic silane self-crosslinking reaction, which can be depicted as follows: 2 Si-OR^{5/6} + H₂O -> Si-O-Si + 2 HO-R^{5/6}, and which, in many cases is the predominant reaction.

The more Si-OR^{5/6} groups (i.e., Si-OR⁵ groups or Si-OR⁶ groups) are present in the crosslinking agent, the higher the crosslinking density with, e.g., a hydroxy functional polymer and the higher the self-crosslinking density, compared to compositions which are identical, except for having a higher value of the sum of n+m. Since preferably a high crosslinking density is desired n and m should be 0 or 1, more preferably n+m should be 0 or 1, most preferably n+m should be 0.

### Alkoxysilane groups containing groups of formula (III)

R in formula (I) can also be an alkoxylsilane containing group of formula (III)

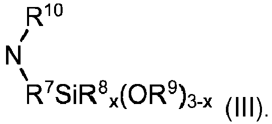

As already defined above, R⁷ is selected from linear, branched and cyclic alkylene groups having 1 to 10, preferably 2 to 8, more preferred 3 to 6 and even more preferred 3, 4 or 5 carbon atoms and most preferred 3 carbon atoms, such as in (CH₂)₃ groups. Groups R⁸ are selected independently from each other from linear, branched and cyclic alkyl groups having 1 to 10, preferably 1 to 6, more preferred 1 to 4 and most preferred 1, 2 or 3 carbon atoms. Groups R⁹ are independently selected from alkyl groups containing 2, 3 or 4, more preferred 2 or 3 and most preferred 2 carbon atoms. Group R¹⁰ is H or preferably an alkyl group containing 1 to 10, preferably 2 to 8, more preferred 4 to 6, and most preferred 4 carbon atoms. The value of x being 0, 1 or 2, preferably 0 or 1, most preferred 0.

The considerations regarding the structure-reactivity relationships between the residues R¹, R², R³, R⁴, R⁵ and R⁶ and the reactivities of these residues themselves within groups R¹SiR³ₘ(OR⁵)₃₋ₘ and R²SiR⁴ₙ(OR⁶)₃₋ₙ as well as the corresponding values for n and m, are likewise valid for the residues R⁷, R⁸ and R⁹ and the value of x in groups R⁷SiR⁸ₓ(OR⁹)₃₋ₓ.

With respect to a balanced reactivity of the silane groups in the crosslinking agents (X), it is preferred that for each combination of residues R⁷ with R⁹ the sum of carbon atoms of both residues R⁷ and R⁹ is at least 4, more preferred 4 to 7, even more preferred 4 to 6 and most preferred 5. E.g., if R⁷ is a propylene residue (3 carbon atoms), which is preferred, and each residue R⁹ is an ethyl group (2 carbon atoms), which is preferred, the sum of carbon atoms of each combination of R⁷ and R⁹ is 3 + 2 = 5 carbon atoms.

### Isocyanate Blocking Groups R^{b}

Isocyanate blocking groups are groups which are formed or can be described by formally removing the active hydrogen from the corresponding isocyanate blocking agent H-R^{b}. Isocyanate blocking agents are compounds having an active hydrogen, which is apt to react with an isocyanate group (NCO group) under reversible formation of an -NH-(C=O)- group. At the crosslinking temperature of a coating material, which, e.g., contains reactants comprising crosslinkable groups such as the hydroxy groups, preferably hydroxyl groups of a hydroxy functional polymer, deblocking of the blocked isocyanate group occurs, typically under release of the blocking agent.

Examples of suitable types or categories of blocking agents and also specific examples of such blocking agents include one or more of the following.

Blocking agents for preparing the fully blocked polyisocyanates are for example
i. phenols, pyridinols, thiophenols and mercaptopyridines, preferably selected from the group consisting of phenol, cresol, xylenol, nitrophenol, chlorophenol, ethylphenol, t-butylphenol, hydroxybenzoic acid, esters of this acid, 2,5-di-tert-butyl-4-hydroxytoluene, thiophenol, methylthiophenol and ethylthiophenol;
ii. alcohols and mercaptanes, the alcohols preferably being selected from the group consisting of methanol, ethanol, n-propanol, isopropanol, n-butanol, isobutanol, t-butanol, n-amyl alcohol, t-amyl alcohol, lauryl alcohol, ethylene glycol monomethyl ether, ethylene glycol monoethyl ether, ethylene glycol monopropyl ether, ethylene glycol monobutyl ether, diethylene glycol monomethyl ether, diethylene glycol monoethyl ether, diethylene glycol monopropyl ether, diethylene glycol monobutyl ether, propylene glycol monomethyl ether, methoxy methanol, 2-(hydroxyethoxy)phenol, 2-(hydroxypropoxy)phenol, glycolic acid, glycolic esters, lactic acid, lactic esters, methylol urea, methylol melamine, diacetone alcohol, ethylene chlorohydrin, ethylene bromohydrin, 1,3-dichloro-2-propanol, 1,4-cyclohexyldimethanol or acetocyano hydrin, and the mercaptanes preferably being selected from the group consisting of butyl mercaptane, hexyl mercaptane, t-butyl mercaptan, t-dodecyl mercaptane;
iii. oximes, preferably the ketoximes of the groups consisting of the ketoxime of tetramethylcyclobutanedione, methyl n-amyl ketoxime, methyl isoamyl ketoxime, methyl 3-ethylheptyl ketoxime, methyl 2,4-dimethylpentyl ketoxime, methyl ethyl ketoxime, cyclohexanone oxime, methyl isopropyl ketoxime, methyl isobutyl ketoxime, diisobutyl ketoxime, methyl t-butyl ketoxime, diisopropyl ketoxime and the ketoxime of 2,2,6,6-tetramethylcyclohexanone; or the aldoximes, preferably from the group consisting of formaldoxime, acetaldoxime;
iv. amides, cyclic amides and imides, preferably selected from the group consisting of lactams, such as ε-caprolactam, δ-valerolactam, γ-butyrolactam or β-propiolactam; acid amides such as acetoanilide, acetoanisidinamide, acrylamide, methacrylamide, acetamide, stearamide or benzamide; and imides such as succinimide, phthalimide or maleimide;
v. imidazoles and amidines;
vi. pyrazoles and 1,2,4-triazoles, such as 3,5-dimethylpyrazole and 1,2,4-triazole;
vii. amines and imines such as diphenylamine, phenylnaphthylamine, xylidine, N-phenylxylidine, carbazole, aniline, naphthylamine, butylamine, dibutylamine, butylphenylamine and ethyleneimine;
viii. imidazoles such as imidazole or 2-ethylimidazole;
ix. ureas such as urea, thiourea, ethyleneurea, ethylenethiourea or 1,3-diphenylurea;
x. active methylene compounds such as dialkyl malonates like diethyl malonate, and acetoacetic esters; and
xi. others such as hydroxamic esters as for example benzyl methacrylohydroxamate (BMH) or allyl methacrylohydroxamate, and carbamates such as phenyl N-phenylcarbamate or 2-oxazolidone.

Amongst the above blocking agents, the oximes (group iii.), particularly methyl ethyl ketoxime and the pyrazoles (group vi.), particularly 3,5-dimethylpyrazole are most preferred.

The blocking agents of group x. do not react in a deblocking reaction at elevated temperature, but in a transesterification of the ester groups present therein, when reacted with alcohols, particularly polyols.

Further blocking agents and their mechanisms of action, kinetics as well as catalysis are, e.g., described in the Review Paper from D. A. Wicks and Z. W. Wicks with the title "Blocked isocyanates III: Part A. Mechanisms and chemistry" in Progress in Organic Coatings 36 (1999), 148-172.

### Contents and Ratios of Different R Groups

The crosslinking agent (X) of general formula (I) 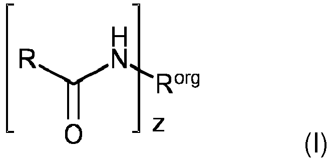 wherein R, R^{org} and z are defined above contains at least two groups R(C=O)NH, i.e., z is at least 2.

If z = 2 in the crosslinking agent (X), it is preferred that both residues R are residues of formula (II). This is, e.g., the case if a monomeric diisocyanate such as H12-MDI is used as R^{m}(NCO)₂.

If on average more than two (z > 2), such as three or more (z ≥ 3) residues of formula (I) are comprised in the crosslinking agent (X), it is preferred that on average a part of residues R are residues of formula (II) and that on average at least a part of the R residues are blocking groups R^{b}.

As already explained above, crosslinking agents (X) are herein considered as substances comprising a plurality of molecules which do not necessarily have to be identical. Thus, if mole percentages and mole percentage ranges regarding residues R are used to describe the amounts and types of R groups in the crosslinking agents (X) those mole percentages are averages over the plurality of molecules contained therein.

In a hypothetical example, the crosslinking agent (X) consists of a mixture of exactly two types of molecules in a 50:50 molar ratio. The first type of molecule is based on an isocyanurate of HDI wherein 2 of 3 NCO groups were reacted to introduce a specific group of formula (II) and the remaining one of the 3 NCO groups was reacted to introduce a dimethylpyrazole blocking group. The second type of molecule is an isocyanurate of HDI wherein 1 of 3 NCO groups was reacted to introduce the very same specific group of formula (II) as was introduced in the first type of molecule and the remaining 2 of 3 NCO groups were reacted to introduce dimethylpyrazole blocking groups. On a molecular level, in the first type of molecules 66.7 mole-% of specific groups of formula (II), and 33.3 mole-% of dimethylpyrazole blocking groups are contained, while in the second type of molecules 33.3 mole-% of specific groups of formula (II), and 66.7 mole-% of dimethylpyrazole blocking groups are contained. However, in this hypothetical example, *on average* 50 mole-% of groups of formula (I) in the crosslinking agent (X) contain the specific group of formula (II) as residues R and *on average* 50 mole-% of groups of formula (I) in the crosslinking agent (X) contain a dimethylpyrazole group as residues R. In other words, since an ideal isocyanurate contains 3 groups of formula (I), *on average* 1.5 of the three groups of formula (I) contain the specific group of formula (II) as residue R and *on average* 1.5 of the three groups of formula (I) contain the a dimethylpyrazole blocking group as residue R.

Consequently, in relation to the crosslinking agent (X) as a substance, different ranges of molar ratios of the different R groups can be accomplished, depending on the molar ratios of the starting compounds used to introduce the groups of formulae (II) and (III) and the isocyanate blocking groups.

Preferably the molar percentage ranges of the entirety of residues R in the crosslinking agent (X) are as follows:
15 to 100 mole-% of the entirety of residues R are residues of formula (II);
0 to 50 mole-% of the entirety of residues R are residues of formula (III); and
0 to 85 mole-% of the entirety of residues R are isocyanate blocking groups.

More preferred the molar percentage ranges of the entirety of residues R in the crosslinking agent (X) are as follows:
20 to 100 mole-% of the entirety of residues R are residues of formula (II);
0 to 20 mole-% of the entirety of residues R are residues of formula (III); and
0 to 80 mole-% of the entirety of residues R are isocyanate blocking groups.

More preferred the molar percentage ranges of the entirety of residues R in the crosslinking agent (X) are as follows:
30 to 100 mole-% of the entirety of residues R are residues of formula (II);
0 to 10 mole-% of the entirety of residues R are residues of formula (III); and
0 to 70 mole-% of the entirety of residues R are isocyanate blocking groups.

Most preferred the molar percentage ranges of the entirety of residues R in the crosslinking agent (X) are as follows:
40 to 100 mole-% of the entirety of residues R are residues of formula (II);
0 to 5 mol-%, preferably 0 mole-% of the entirety of residues R are residues of formula (III); and
0 to 60 mole-% of the entirety of residues R are isocyanate blocking groups.

It was further found that in case R^{org} is a residue which contains one or more cycloaliphatic moieties of cycloaliphatic moiety containing diisocyanates, such as present in IPDI and H12-MDI, it is preferred that the molar percentage ranges of the entirety of residues R in the crosslinking agent (X) are as follows:
20 to 100 mole-%, more preferred 60 to 100 mole-% of the entirety of residues R are residues of formula (II);
0 to 10 mole-%, more preferred 0 to 5 mole-%, such as 0 mole-% of the entirety of residues R are residues of formula (III); and
0 to 80 mole-%, more preferred 0 to 40 mole-% of the entirety of residues R are isocyanate blocking groups.

On the other hand, in case R^{org} contains no cycloaliphatic moieties of cycloaliphatic moiety containing diisocyanates, but linear aliphatic moieties of linear aliphatic moiety containing diisocyanates, such as present in HDI, it is preferred that the molar percentage ranges of the entirety of residues R in the crosslinking agent (X) are as follows:
20 to 90 mole-%, more preferred 50 to 80 mole-% of the entirety of residues R are residues of formula (II);
0 to 10 mole-%, more preferred 0 to 5 mole-%, such as 0 mole-% of the entirety of residues R are residues of formula (III); and
10 to 80 mole-%, more preferred 20 to 50 mole-% of the entirety of residues R are isocyanate blocking groups.

Typically, in all embodiments the presence of groups of formula (III) is less desirable, because compared to groups of formula (II) their contribution to the network density in the resulting cured coating is less.

### Method of Preparing the Crosslinking Agents (X)

Crosslinking Agent (X) is preferably prepared by reacting a diisocyanate or polyisocyanates of formula R^{org}(NCO)_{z}, such as a diisocyanate R^{m}(NCO)₂, an oligomeric di- or polyisocyanate R^{o}(NCO)ᵣ or a polymeric di- or polyisocyanates R^{p}(NCO)ₛ, wherein R^{org}, R^{m}, R^{o}, R^{P}, s, r and z are defined as above, with
i. at least one secondary amine of formula (IIa): 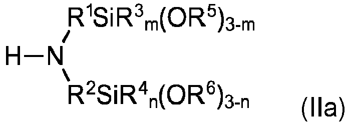 wherein R¹, R², R³, R⁴, R⁵, R⁶, m and n are defined as above;
   and in case that not all of groups R in formula (I) are groups of formula (II), additionally with
ii. at least one amine of formula (IIIa): 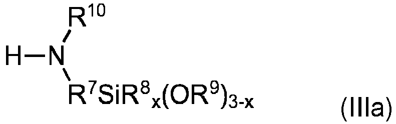 wherein R⁷, R⁸, R⁹, R¹⁰ and x are defined as above; and/or
iii. at least one isocyanate blocking agent H-R^{b} as defined above
with the proviso that on average at least 15 mole-% of the entirety of the NCO groups of the diisocyanates or polyisocyanates of formula R^{org}(NCO)_{z} are reacted with compounds of formula (IIa).

Examples of secondary amines (IIa) are, e.g., bis(2-ethyltriethoxysilyl) amine, bis(3-propyltriethoxysilyl) amine and/or bis(4-butyltriethoxysilyl) amine. Very particular preference is given to bis(3-propyltriethoxysilyl) amine. Aminosilanes of this kind are available, for example, under the brand name DYNASYLAN^{®} from Evonik or Silquest^{®} from Momentive.

Examples of amines (IIIa) are, e.g., 2-aminoethyltriethoxysilane, 3-aminopropyltriethoxysilane, 4-aminobutyltriethoxysilane. Particularly preferred compounds (IIIa) are N-(2-(triethoxysilyl)ethyl)alkylamines, N-(3-(triethoxysilyl)-propyl)alkylamines and/or N-(4-(triethoxysilyl)butyl)alkylamines. Particularly preferred amino silanes of formula (IIIa) are gamma-amino silanes. Aminosilanes of this kind are available, for example, under the brand name DYNASYLAN^{®} from Evonik or Silquest^{®} from Momentive.

Preferably, the above reaction is carried out without solvent or in the presence of an aprotic organic solvent wherein the ingredients are soluble.

Amongst useful polar aprotic solvents preferred solvents are ketones, esters, acetates, aprotic amides, aprotic sulfoxides, and aprotic amines. Examples of specific useful solvents include ketones, such as acetone, methyl ethyl ketone, methyl amyl ketone and methyl isobutyl ketone; esters such as ethyl acetate, butyl acetate, pentyl acetate, ethyl ethoxypropionate, ethylene glycol butyl ether acetate and propylene glycol monomethyl ether acetate; ethers such as glycol diethers; alkoxyalkanoles, such as methoxypropanol; nitrogen-containing compounds such as N-methyl pyrrolidone and N-ethyl pyrrolidone. Amongst the useful non-polar aprotic solvents preferred are aliphatic and/or aromatic hydrocarbons such as toluene, xylene, solvent naphtha, and mineral spirits.

Even more preferred, such solvents are selected from hydrocarbons such as Solvent Naphtha, esters such as butyl acetate or methoxypropylacetate and ketones such as methyl ethyl ketone.

Preferably, a solution of the respective isocyanate R^{m}(NCO)₂, R^{o}(NCO)ᵣ or R^{p}(NCO)ₛ is provided and the one or more secondary amines of formula (IIa) and optionally one or more of amines of formula (IIIa) and/or the one or more isocyanate blocking agents are added. The sequence of adding the secondary amines and blocking agents is not critical. They can be added one after the other or simultaneously.

The reaction is preferably carried out at a temperature of not more than 100 °C, more preferably 30 to 80 °C and even more preferred 35 to 60 °C, and most preferred 40 to 50 °C. Even more preferably the reaction is carried out under an inert gas atmosphere such as a nitrogen atmosphere, while agitating.

The secondary amine of formula (IIa), and the optional amine of formula (IIIa) and/or isocyanate blocking agent are preferably employed in the reaction with the respective isocyanate or isocyanate mixtures in a stochiometric amount allowing conversion of all isocyanate groups originally present in the isocyanate, which is employed in the reaction.

The molar percentages of the different groups R can be easily adjusted by employing the respective molar amounts of the amines and isocyanate blocking agents based on a 100 mole-% conversion of the original isocyanate groups contained in the isocyanate group containing starting compounds.

Since the crosslinking agent (X) can be used in a storage stable one-pack coating material, it is clear for one of skill in the art that the reaction is carried out until all available isocyanate groups have reacted with the secondary amine of formula (IIa), and the optional amine of formula (IIIa) and/or isocyanate blocking agent. The conversion rate (i.e., the progress of the reaction between the isocyanate groups and the isocyanate reactive groups) can be monitored by determination of the remaining NCO content as described in detail in the experimental section of the present invention. The crosslinking agent (X) preferably comprises a content of free isocyanate groups of less than 1.0 wt.-%, more preferably 0.5 wt.-%, more preferably of 0.05 to 0 %. This ensures that the crosslinking agent is essentially free of NCO groups, thus allowing to use this compound in isocyanate-free coating materials.

### Use of the crosslinking agents (X) in curable compositions

A further subject matter of the present invention is the use of the crosslinking agents (X) of the invention in curable compositions, such as coating materials, comprising substances which are reactive towards hydrolysable silane groups.

Since the crosslinking agents (X) of the present invention at least comprise functional groups (II), i.e., hydrolysable silane groups, i.e., Si-O-alkyl groups, the alkyl groups containing 2, 3, or 4 carbon atoms, the crosslinking agents are apt to react with the same groups (self-crosslinking) or with OH functional groups of monomeric, oligomeric, or polymeric substances at elevated temperatures, such as employed to cure one-pack coating materials.

Thus, crosslinking agents (X) of the invention can be used as to increase the crosslinking density of one-pack composition such as one-pack coating materials, particularly one-pack coating materials used as clear coat materials in automotive coating.

The term "coating material" according to DIN EN ISO 4618:2015-01 is used for a product, in liquid, paste or powder form, that, when applied to a substrate, forms a layer possessing protective, decorative and/or other specific properties. Herein, the coating materials typically contain one or more aprotic organic solvents and are thus typically liquid coating materials.

The term "one-pack coating material", in contrast to "two-pack coating materials", are coating materials containing a crosslinkable component and a crosslinking agent component, where these components do not pre-maturely react with each other (see Römpp Lexikon Lacke und Druckfarben, Georg Thieme Verlag, 1998, page 179, keyword "Einkomponenten-Lacke" (one-pack coatings)).

As already stated in the previous paragraph, the coating materials wherein the crosslinking agents of the present invention are preferably employed are preferably one-pack coating materials, the ingredients of which do not pre-maturely react with each other. Since the coating materials contain moisture sensitive groups, i.e., hydrolysable silane groups, it is inherent that in the one-pack coating material, no water is employed intentionally, to avoid pre-mature curing. Thus, the ingredients employed should preferably be water-free. However, sometimes minor unavoidable amounts of water may be present. In such cases, the total amount of water based on the total weight of the coating material should preferably not exceed 1 wt.-%, even more preferred it should be in the range from 0 to 1.0 wt.-%, even more preferred from 0 to 0.5 wt.-% based on the total weight of the coating material. Particularly the one-pack coating materials should preferably not contain substances having free isocyanate groups (NCO groups). If contained in minor residual amounts, the NCO content of the one-pack coating material of the present invention should not exceed 1 wt.-% of NCO groups, even more preferred the content should be in the range from 0 to 1.0 wt.-%, even more preferred from 0 to 0.5 wt.-% based on the total weight of the coating material.

The one-pack coating material containing the crosslinking agent (X) of the invention is preferably a basecoat material and/or a topcoat material (i.e., a finishing coat material, which by definition according to DIN EN ISO 4618:2015-01 forms the final coat of a coating system), the topcoat material preferably being a clearcoat material (i.e., a clear coating material, which by definition according to DIN EN ISO 4618:2015-01 is coating material which when applied to a substrate forms a solid transparent film having protective, decorative or specific technical properties). Most preferred the coating material is a clear coat material. Particularly preferred the coating material is an automotive coating material, i.e., a coating material used in automotive coating, preferably as a clear coat material.

Beside the crosslinking agent (X) of the present invention the one-pack compositions, preferably the one-pack coating materials wherein the crosslinking agents (X) are advantageously employable, such compositions or material preferably contains one or more hydroxy-functional substances, selected from the group consisting of hydroxy functional monomers, oligomers, and polymers. The hydroxy-functional polymers preferably being selected from the group comprising (meth)acrylic polymers, polyesters, and polyurethanes.

Further contained in such coating materials are aprotic solvents, which are selected from the same groups of aprotic solvents as employed in the method of preparing the crosslinking agent (X) of the present invention.

Moreover, such coating material may contain, and preferably contains one or more further crosslinking agents differing from the crosslinking agent of the invention, such crosslinking agents being selected from the group comprising blocked polyisocyanates and aminoplast resins.

Particularly preferred, such coating materials comprise one or more catalysts to catalyze the crosslinking reactions in the coating material. Most preferred is the presence of acidic catalysts in the coating material. Such catalysts are well known in the art and include, for example, para-toluenesulfonic acid, dinonylnaphthalene disulfonic acid, dodecylbenzenesulfonic acid, phenyl acid phosphate, monobutyl maleate, butyl phosphate, and hydroxy phosphate ester. Such (strong) acid catalysts, which are preferred in the present invention, are often blocked, e.g., with an amine. However, crosslinking can also be catalyzed by further catalysts such as for example organotin catalysts and bismuth-based catalysts. Amongst the organotin catalysts dialkyltin dicarboxylates such as dibutyltin dilaurate or dioctyltin dilaurate are preferred. Amongst the bismuth-based catalysts bismuth carboxylates such as bismuth neodecanoate or bismuth ethylhexanoate are preferred.

The one-pack coating materials may also comprise colorants such as dye, pigments or fillers and typical coating additives such as surfactants, stabilizers, wetting agents, dispersing agents, adhesion promoters, UV absorbers, hindered amine light stabilizers such as HALS compounds, benzotriazoles or oxalanilides; free-radical scavengers; slip additives; defoamers; reactive diluents, of the kind which are common knowledge from the prior art; wetting agents such as siloxanes, fluorine compounds, carboxylic monoesters, phosphoric esters, polyacrylic acids and their copolymers, for example polybutyl acrylate, or polyurethanes; adhesion promoters such as tricyclodecanedimethanol; flow control agents; film-forming assistants such as cellulose derivatives; rheology control additives; inorganic phyllosilicates such as aluminum-magnesium silicates, sodium-magnesium and sodium-magnesium-fluorine-lithium phyllosilicates of the montmorillonite type; silicas such as Aerosil^{®}; or synthetic polymers containing ionic and/or associative groups such as polyvinyl alcohol, poly(meth)acrylamide, poly(meth)acrylic acid, polyvinylpyrrolidone, styrene-maleic anhydride copolymers or ethylene-maleic anhydride copolymers and their derivatives, or hydrophobically modified ethoxylated urethanes or polyacrylates; flame retardant; and so on. Typical coating materials include one or a combination of such additives.

If pigments and/or fillers are contained the amount is preferably chosen low to just give the coating a tint.

Of course, the coating material, wherein the crosslinking agent (X) of the invention is used, may also contain protic solvents. Such protic solvents should however be selected to be virtually inert to the ingredients contained in the coating material, particularly inert towards the crosslinking agent (X). Typically, such protic solvents might be alcohols such as butanol or the like.

Preferably, the use of the invention, namely the use of the crosslinking agents (X) of the invention in curable compositions, comprises the use in curable coating materials, such as one-pack coating material, which form cured coating layers on a substrate.

Thus, the crosslinking agents (X) of the invention can be used in a method of forming a coating on a substrate (S) with such coating materials, the method comprising the following steps:
(1) applying a coating material containing the crosslinking agent (X) of the invention onto the substrate (S);
(2) forming a coating film from the coating material applied in step (1); and
(3) curing the coating film formed in step (2).

The coating materials can be coated by any of several techniques well known in the art. These include, for example, spray coating, dip coating, roll coating, curtain coating, knife coating, spreading, pouring, dipping, impregnating, trickling or rolling, and the like. For automotive body panels, spray coating is typically used. Preference is given to employing spray application methods, such as compressed-air spraying, airless spraying, high-speed rotation, electrostatic spray application, alone or in conjunction with hot spray application such as hot-air spraying, for example.

The coating materials and coating systems are employed in particular in the technologically and esthetically particularly demanding field of automotive OEM finishing. The coating materials can be used in both single-stage and multistage coating methods.

The applied coating materials can be cured after a certain rest time or "flash" period. The rest time serves, for example, for the leveling and devolatilization of the coating films or for the evaporation of volatile constituents such as solvents. The rest time may be assisted or shortened by the application of elevated temperatures or by a reduced humidity, provided this does not entail any damage or alteration to the coating films, such as premature crosslinking, for instance.

The thermal curing of the coating materials has no peculiarities in terms of method but instead takes place in accordance with the typical, known methods such as heating in a forced-air oven or irradiation with IR lamps. The thermal cure may also take place in stages. Another preferred curing method is that of curing with near infrared (NIR) radiation.

Generally, heat curing is affected by exposing the coated article to elevated temperatures provided primarily by radiative heat sources. After application, the applied coating layer is cured, for example with heat at temperatures from above 100 °C to 200 °C, or from 110 to 190 °C, or from 120 to 180 °C, for a time of 5 min up to 30 min, and more preferably 10 min up to 25 min. The curing temperatures are understood as the temperatures surrounding the coating layer to be cured, and thus not necessarily the temperature of the substrate or the coating layer to be cured.

Film thicknesses (i.e., layer thicknesses) as described herein relate to dry layer film thicknesses, i.e., the layer thickness of the cured layer/film. The layer thicknesses of the cured layers of the coating material comprising the crosslinking agent (X) of the present invention formed on substrates are as follows. Cured primer layers, if applied, formed from the coating material of the present invention typically have thicknesses of from about 12 µm to about 25 µm. Cured filler layers, if applied, formed from the coating material of the present invention typically have thicknesses of from about 10 µm to about 40 µm. Cured base coat layers, if applied, formed from the coating material containing the crosslinking agent (X) of the invention typically have a thickness of from about 10 to about 25 µm. Cured clear coat layers, if applied, formed from the coating material containing the crosslinking agent (X) of the invention typically have a thickness of from about 20 to about 50 µm.

Preferably the substrate materials are chosen from the group consisting of metals, polymers, wood, glass, mineral-based materials and composites of any of the afore-mentioned materials.

The term metal comprises metallic elements like iron, aluminum, zinc, copper and the like as well as alloys such as steel like bare steel, cold-rolled steel, galvanized steel and the like. Polymers can be thermoplastic, duroplastic or elastomeric polymers, duroplastic and thermoplastic polymers being preferred. Mineral-based materials encompass materials such as e.g., hardened cement and concrete. Composite materials are e.g., fiber-reinforced polymers etc.

Of course, it is possible to use pre-treated substrates, where the pre-treatment regularly depends on the chemical nature of the substrate.

Preferably, the substrates are cleaned before use, e.g., to remove dust, fats, oils or other substances which typically prevent a good adhesion of coatings. The substrate can further be treated with adhesion promoters to increase the adhesion of subsequent coatings.

Metallic substrates may comprise a so-called conversion coat layer and/or electrodeposition coat layer before being coated with the coating material containing the crosslinking agent (X) of the invention. This is particularly the case for substrates in the automotive coating field such as automotive OEM and automotive refinish coating.

The electrodeposition composition used to form the electrodeposition coat layer can be any electrodeposition composition used in automotive vehicle coating operations. Non-limiting examples of electrocoat compositions include electrocoating materials sold by BASF. Electrodeposition coating baths usually comprise an aqueous dispersion or emulsion including a principal film-forming epoxy resin having ionic stabilization (e.g., salted amine groups) in water or a mixture of water and organic cosolvent. Emulsified with the principal film-forming resin is a crosslinking agent that can react with functional groups on the principal resin under appropriate conditions, such as with the application of heat, and so cure the coating. Suitable examples of crosslinking agents include, without limitation, blocked polyisocyanates. The electrodeposition coating materials usually include one or more pigments, catalysts, plasticizers, coalescing aids, antifoaming aids, flow control agents, wetting agents, surfactants, UV absorbers, HALS compounds, antioxidants, and other additives.

The electrodeposition coating material is preferably applied to a dry film thickness of 10 to 25 µm. After application, the coated vehicle body is removed from the bath and rinsed with deionized water. The coating may be cured under appropriate conditions, for example by baking at from about 135 °C to about 190 °C for preferably about 15 to about 60 minutes.

For polymeric substrates pretreatment may include, for example, treatment with fluorine, or a plasma, corona, or flame treatment. Often the surface is also sanded and/or polished. The cleaning can also be done manually by wiping with solvents with or without previous grinding or by means of common automated procedures, such as carbon dioxide cleaning.

Any of the above substrates can also be pre-coated with one or more fillers and/or one or more base coats prior to the formation of the coating layer. Such fillers and base coats may contain color pigments and/or effect pigments such as metallic effect pigments as, e.g., aluminum pigments; or pearlescent pigments as, e.g., mica pigments. This is particularly the case for substrates in the automotive coating field such as automotive OEM and automotive refinish coating.

Depending on the substrate material chosen, the coating materials can be applied in a wide variety of different application areas. Many kinds of substrates can be coated. The coating materials comprising the crosslinking agent (X) of the invention are therefore outstandingly suitable for use as decorative and protective coating systems, particularly for bodies of means of transport (especially motor vehicles, such as motorcycles, buses, trucks or automobiles) or parts thereof. The substrates preferably comprise a multilayer coating as used in automotive coating.

The coating materials containing the crosslinking agent (X) of the invention are also suitable for use on constructions, interior and exterior; on furniture, windows, and doors; on plastics moldings, especially CDs and windows; on small industrial parts, on coils, containers, and packaging; on white goods; on sheets; on optical, electrical and mechanical components, and on hollow glassware and articles of everyday use.

The crosslinking agent (X) of the invention can also be used in a curable composition which is a coating material being used to form a layer in a multilayer coating system. A multilayer coating, consisting of at least two coating layers, at least one of which is formed from a coating material comprising the crosslinking agent (X) of the invention. Typically, the multilayer coating comprises more than two coating layers.

A preferred multilayer coating comprises at least one pigment and/or filler containing layer, such as a primer coat layer, filler coat layer or a base coat layer; and at least one clear coat layer. The coating materials comprising the crosslinking agent (X) of the invention preferably form the clear coat layer.

Even more preferred is a multilayer coating comprising at least one filler coat layer, coated with at least one base coat layer, which again is coated with at least one clear coat layer.

Particularly, but not limited to automotive coating a multilayer coating preferably comprises an electro coat layer, at least one filler coat layer on top of the electro coat layer, coated with at least one base coat layer, which again is coated with at least one clear coat layer.

The above multilayer coatings can be applied to any of the substrates named above, typically, but not limited to pretreated substrates.

In the following the invention is further described by mean of examples.

### EXAMPLES

The present invention will now be explained in greater detail by working examples, but the present invention is in no way limited to these working examples. Moreover, the terms "parts", "%" and "ratio" in the examples denote "parts by mass", "mass %" and "mass ratio" respectively unless otherwise indicated.

### Analytical Methods

### Solids Content (Solids, Nonvolatile Fraction)

The nonvolatile fraction is determined according to DIN EN ISO 3251 (date: June 2008). It involves weighing out 1 g of sample into an aluminum dish which has been dried beforehand, drying it in a drying oven at 130°C for 60 minutes, cooling it in a desiccator and then reweighing it. The residue relative to the total amount of sample used corresponds to the nonvolatile fraction.

### Isocyanate Content (NCO Content)

The isocyanate content was determined by adding an excess of a 2% N,N-dibutylamine solution in xylene to a homogeneous solution of the sample in acetone/N-ethyl pyrrolidone (1:1 vol%), by potentiometric back-titration of the amine excess with 0.1 N hydrochloric acid, in a method based on DIN EN ISO 3251:2008-06, DIN EN ISO 11909:2007-05, and DIN EN ISO 14896:2009-07. The NCO content of the silane-based compound R, based on solids, can be calculated via the fraction of the polymer (solids content) in solution.

### Viscosity

The viscosity was determined by the withdrawn standard DIN 53211:1974-04 by measurement of the flow time (in seconds) by means of a DIN 4 Cup at a temperature of 23°C.

### Testing Methods

### Scratch resistance

Scratch resistance of the coating layer was determined using a linear abrasion tester (crockmeter) according DIN 55654:2015-08. This standard specifies a procedure for determining the resistance of a coating to scratching caused by a linearly moving scratching material loaded over its entire surface. The process can also be applied to other material surfaces such as plastics, coatings, and metals. With a linear lifting device (crockmeter), a loaded friction pin covered with agreed scratch material (P2400 abrasive paper) was moved over the coating under the influence of an agreed scratch medium. In the motor version, a preselection counter for the double stroke number must be integrated and the drive must be designed so that the stroke frequency is (1.0 ± 0.1) Hz. Ten (10) double strokes were carried out. The evaluation of the scratch mark was done directly by measuring the residual gloss at 60° using a standard commercial gloss meter. Four panels of each multilayer-coated substrate were prepared, and each substrate was tested at two positions. An average value was calculated from these eight measurements. The average value was than corrected by a PMMA reference, which was tested in the same manner. Ideally the gloss loss of this reference is 20, but it has to be in the range of 15 to 25. If the reference gloss loss was between 20 and 25, the difference of the measured gloss loss and 20 had to be subtracted from the calculated average value of the multilayer-coated substrates. If the gloss loss was between 15 and 20, the difference of the measured gloss loss and 15 had to be added to the calculated mean value of the multi-layer coated substrates.

### Preparation of different silane-modified and optionally 3,5-dimethylpyrazole blocked polyisocyanates

Different silane-modified and optionally 3,5-dimethylpyrazole blocked polyisocyanates were prepared according to the following general procedure using the amounts listed in Table 1 below:
In a reaction vessel a polyisocyanate selected from hexamethyl 1,6-diisocyanate (HDI) trimer (Desmodur^{®} N3300), 4,4'-diisocyanato dicyclohexylmethane (H12-MDI) (Desmodur W), or isophorone diisocyanate (IPDI) trimer (Vestanat) and solvents (solvent naptha, methoxypopyl acetate, butyl acetate, methylethyl ketone) are introduced. With reflux cooling, nitrogen blanketing and stirring, bis(3-triethoxysilylpropyl)amine (Dynasylan^{®} 1122) and optionally 3,5-dimethylpyrrazole (DMP) are added dropwise at a rate such that a temperature of 50-60° C is not exceeded in a stochiometric ratio allowing conversion of all isocyanate groups originally present in the isocyanate source compound until the remaining NCO content reached a value < 1%, determined by means of titration as described above.

**Table 1**

| **Ingredients** | **Examples E1 to E7** | | | | | | |
|---|---|---|---|---|---|---|---|
| | **E1** | **E2** | **E3** | **E4** | **E5** | **E6** | **E7** |
| HDI trimer | 23.23 | 31.70 | 38.77 | 40.58 | 0 | 0 | 0 |
| IPDI trimer | 0 | 0 | 0 | 0 | 38.68 | 44.98 | 0 |
| H12-MDI | 0 | 0 | 0 | 0 | 0 | 0 | 12.68 |
| Dynasylan^{®} 1122 | 51.77 | 35.33 | 21.60 | 18.09 | 27.13 | 15.77 | 41.21 |
| 3,5-Dimethylpyrazole | 0 | 7.98 | 14.63 | 16.34 | 9.19 | 14.25 | 0 |
| Solventnaptha | 13.75 | 13.75 | 13.75 | 13.75 | 13.75 | 13.75 | 0 |
| Methoxypropyl acetate | 11.25 | 11.25 | 11.25 | 11.25 | 11.25 | 11.25 | 0 |
| Butyl acetate | 0 | 0 | 0 | 0 | 0 | 0 | 36.32 |
| Methylethylketone | 0 | 0 | 0 | 0 | 0 | 0 | 9.792 |
| NCO% | 0.0% | 0.0 % | 0.0% | 0.0% | 0.0% | 0.0% | 0.0% |
| Molar ratio aminosilane:DMP | 100:0 | 82:18 | 60:40 | 20:80 | 40:60 | 20:80 | 100:0 |
| Solids content [%] | 74.9 | 70.9% | 72.3% | 75% | 75% | 75% | 53.4% |

### Preparation of base formulations A and B

The ingredients of two different base formulations A and B were mixed in the amounts shown in Table 2. All amounts are in gram.

**Table 2: Composition of base formulations A and B**

| **Ingredients** | **Base formulation A** | **Base formulation B** |
|---|---|---|
| Hydroxy-functional polyacrylate I ¹⁾ | 20.00 | 29.11 |
| Hydroxy-functional polyester ²⁾ | 8.20 | 0.00 |
| Aminoplast crosslinker I ³⁾ | 8.46 | 7.23 |
| Aminoplast crosslinker II ⁴⁾ | 10.00 | 8.39 |
| BUTANOL | 3.80 | 1.79 |
| Sag Control Agent ⁵⁾ | 21.40 | 23.13 |
| Blocked polyisocyanate crosslinker ⁶⁾ | 4.70 | 4.02 |
| Hydroxy-functional Polyacrylate II ⁷⁾ | 1.00 | 0.00 |
| XYLENE | 12.00 | 5.54 |
| SOLVENTNAPHTHA 180/210 | 4.70 | 3.93 |
| Butylglycol acetate | 2.90 | 2.50 |
| Butyldiglycol acetate | 0.00 | 0.46 |
| Methoxypropanol | 0.00 | 0.46 |
| HALS ⁸⁾ | 0.33 | 0.28 |
| UV absorber ⁹⁾ | 0.44 | 0.36 |
| Light stabilizer ¹⁰⁾ | 0.76 | 0.68 |
| Leveling Additive I ¹¹⁾ | 0.20 | 0.00 |
| Leveling Additive II ¹²⁾ | 0.00 | 0.18 |
| Dispersing Agent ¹³⁾ | 0.05 | 0.04 |
| De-aerating Agent ¹⁴⁾ | 0.10 | 0.27 |
| Catalyst I ¹⁵⁾ | 0.00 | 0.38 |
| Catalyst II ¹⁶⁾ | 0.96 | 0.55 |

| | | |
|---|---|---|
| ¹⁾OH-functional poly(meth)acrylate (Tg < 0°C; OH value approx. 150 mg KOH/g, 65 wt.-% solids) ²⁾OH-functional low molecular weight polyester (Tg approx. 10°C; OH value approx. 160 mg KOH/g; 60 wt.-% solids) ³⁾CYMEL 202, 81%B, commercially available from Allnex ⁴⁾SETAMINE US-138 BB-70,70%B, commercially available from Allnex ⁵⁾Urea crystals precipitated in polyacrylate resin (60 wt.-% solids) ⁶⁾ DESMODUR PL 350 MPA/SN, commercially available from Covestro (HDI trimer blocked with DMP; solids content 75 wt.-%) ⁷⁾ OH-functional polyacrylate (Tg < 0 °C; OH value approx. 130 mg KOH/g) ⁸⁾ Tinuvin^{®} 292, sterically hindered amine light stabilizer (BASF SE) ⁹⁾ Tinuvin^{®} 384-2, light stabilizer based on benzotriazole (BASF SE) ¹⁰⁾ Tinuvin^{®} 5248; mixture of HALS and UV absorber (BASF SE) ¹¹⁾ BYK-325 N 52% (BYK Chemie GmbH) ¹²⁾ BYK-315 N (BYK Chemie GmbH) ¹³⁾ commercially available from BYK Chemie GmbH ¹⁴⁾ commercially available from King Industries, Inc. ¹⁵⁾ amine-blocked dodecylbenzenesulfonic acid (DDBSA) solution (70 wt.-% solids) ¹⁶⁾ amine-blocked p-toluene sulfonic acid solution CYCAT 4045, 42% MED (from Allnex) | | |

### Preparation and Stability of Clear Coating Materials

The ingredients of comparative coating materials CCC1 and CCC2 as well as the ingredients of the inventive coating materials ICC1 to ICC21 were mixed in the amounts shown in **Tables 3 and 4** by adding to either base formulation A or B **(Table 2)** 0, 5, 10, or 20 wt.-% of one crosslinking agents E1 to E7. All amounts are in gram. In addition, the stability of the coating materials observed by monitoring the increase of viscosity over time and at an elevated temperature of 40°C is shown.

**Table 3: Formulation and viscosity of different clearcoat materials**

| | | **Inventive Clear Coat Materials ICC1 to ICC12 and Comparative Clear Coat Material CCC1** | | | | | | | | | | | | |
|---|---|---|---|---|---|---|---|---|---|---|---|---|---|---|
| | | **CCC1** | **ICC1** | **ICC2** | **ICC3** | **ICC4** | **ICC5** | **ICC6** | **ICC7** | **ICC8** | **ICC9** | **ICC10** | **ICC11** | **ICC12** |
| **Base Clearcoat A** | | 100.0 | 96.70 | 93.70 | 88.20 | 96.6 | 93.40 | 87.60 | 96.65 | 93.50 | 87.80 | 95.55 | 91.40 | 84.20 |
| **E1** | | | 3.30 | 6.30 | 11.80 | | | | | | | | | |
| **E2** | | | | | | 3.40 | 6.60 | 12.40 | | | | | | |
| **E3** | | | | | | | | | 3.35 | 6.50 | 12.20 | | | |
| **E7** | | | | | | | | | | | | 4.45 | 8.60 | 15.80 |
| **Viscosity** | Initial [s] | 29 | 29 | 29 | 29 | 29 | 29 | 30 | 30 | 30 | 30 | 30 | 29 | 28 |
| | 7 days / 21 °C [s] | 32 | 32 | 32 | 32 | 32 | 32 | 33 | 33 | 33 | 34 | 32 | 32 | 32 |
| | 7 days / 40°C [s] | 42 | 43 | 43 | 45 | 43 | 44 | 44 | 45 | 45 | 46 | 40 | 39 | 36 |

**Table 4: Formulation and viscosity of different clearcoat materials**

| | | **Inventive Clear Coat Materials ICC13 to ICC21 and Comparative Clear Coat Material CCC2** | | | | | | | | | |
|---|---|---|---|---|---|---|---|---|---|---|---|
| | | **CCC2** | **ICC13** | **ICC14** | **ICC15** | **ICC16** | **ICC17** | **ICC18** | **ICC19** | **ICC20** | **ICC21** |
| **Base Clearcoat B** | | 100 | 85.05 | 81.10 | 74.45 | 85.05 | 81.10 | 74.45 | 85.05 | 81.10 | 74.45 |
| **E4** | | | 3.05 | 6.00 | 10.60 | | | | | | |
| **E5** | | | | | | 3.05 | 6.00 | 10.60 | | | |
| **E6** | | | | | | | | | 3.05 | 6.00 | 10.60 |
| **Solvent Naphtha (SN) 165/185** | | 10.70 | 11.90 | 13.05 | 14.95 | 11.90 | 13.05 | 14.95 | 11.90 | 13.05 | 14.95 |
| **Viscosity** | Initial [s] | 29 | 28 | 25 | 28 | 26 | 24 | 23 | 28 | 26 | 24 |
| | 7 days / 21 °C [s] | 31 | 30 | 29 | 30 | 27 | 25 | 26 | 30 | 27 | 25 |
| | 7 days / 40°C [s] | 32 | 30 | 29 | 32 | 29 | 27 | 26 | 31 | 29 | 27 |

The stability of coating materials CCC1, CCC2 and ICC1 to ICC21 was evaluated by monitoring the viscosity increase over time at ambient conditions (about 21 °C) and in an accelerated aging process at an elevated temperature of 40°C. The results in **Tables 3 and 4** show only a minor increase of the viscosity over time as observed for base formulations A and B (CCC1 and CCC2).

Coating materials according to the invention comprising crosslinking agents according to the present invention (ICC1 to ICC12, and ICC13 to ICC21) show a very similar and therefore acceptable low increase in viscosity.

### Preparation of Multilayer Coatings (MC)

Steel panels were first pretreated with Gardobond R zinc phosphatation (commercially available from Chemetall GmbH) and afterwards coated with ED-coat (Cathogard 800, commercially available from BASF Coatings GmbH) in a dry film thickness of 17 to 25 µm .

### Preparation of Multilayer Coatings I

The electrodeposited panels were coated as described below using a pneumatic spray gun at a temperature of 25°C and a relative humidity of 65%. A primer (UniBloc, BASF Coatings GmbH) was applied to the electrodeposited panels such that the film thickness after curing at 150 °C for 15 min was 40 ± 5 µm . A commercially available aqueous basecoat (Colorbrite, BASF Coatings GmbH) was applied such that the film thickness in the cured state was 13.5 ± 1.5 µm. Flash-off was 4 min at room temperature and 10 min at 80 °C (oven time and oven temperature). In the last step the respective coating material CCC1 and ICC1 to ICC12 described in Table 3 above was applied wet-in-wet on top of the basecoat layer. After a flash-off for approximately 7 minutes coating materials CCC1 and ICC1 to ICC12 were cured together with the basecoat for 15 min at 140°C. The dry film thickness of the clearcoat layer in the cured state was 35 to 40 µm.

### Preparation of Multilayer Coatings II

The electrodeposited panels were coated as described below using a pneumatic spray gun at a temperature of 25°C and a relative humidity of 65%. A primer (Gris Moyen, BASF Coatings GmbH) was applied to the electrodeposited panels such that the film thickness after curing was approx. 14 µm, 12 min flash-off at room temperature. A commercially available aqueous basecoat (Noir Perla Nera, BASF Coatings GmbH) was applied such that the film thickness in the cured state was 13.5 ± 1.5 µm . Flash-off was 24 min at room temperature. In the last step the respective coating material CCC2 and ICC13 to ICC2 described in Table 4 above were applied wet-in-wet on top of the basecoat layer. After a flash-off for approximately 12 minutes all layers were cured together for 20 min at 140°C. The dry film thickness of the clearcoat layer in the cured state was 35 to 40 µm.

### Properties of the substrates coated with the multilayer coatings (MC)

The results obtained for the multilayer coatings (MC) prepared as described above using the coating material of the present invention to form a clearcoat are listed in **Tables 5 and 6.**

**Table 5: Results of multilayer coatings with different clear coats**

| | | **Inventive Clear Coat Materials ICC1 to ICC12 and Comparative Clear Coat Material CCC1** | | | | | | | | | | | | |
|---|---|---|---|---|---|---|---|---|---|---|---|---|---|---|
| | | **CCC1** | **ICC1** | **ICC2** | **ICC3** | **ICC4** | **ICC5** | **ICC6** | **ICC7** | **ICC8** | **ICC9** | **ICC10** | **ICC11** | **ICC12** |
| **Base Clearcoat A** | | 100.0 | 96.70 | 93.70 | 88.20 | 96.6 | 93.40 | 87.60 | 96.65 | 93.50 | 87.80 | 95.55 | 91.40 | 84.20 |
| **E1** | | | 3.30 | 6.30 | 11.80 | | | | | | | | | |
| **E2** | | | | | | 3.40 | 6.60 | 12.40 | | | | | | |
| **E3** | | | | | | | | | 3.35 | 6.50 | 12.20 | | | |
| **E7** | | | | | | | | | | | | 4.45 | 8.60 | 15.80 |
| **Gloss** | Initial Gloss 60° [%] | 95 | 95 | 95 | 94 | 94 | 95 | 94 | 95 | 94 | 94 | 95 | 95 | 94 |
| | Residual Gloss 60° [%] | 61 | 63 | 66 | 67 | 66 | 76 | 83 | 80 | 73 | 83 | 76 | 85 | 83 |
| | Δ Gloss 60° | 34 | 32 | 29 | 27 | 28 | 19 | 11 | 15 | 21 | 11 | 19 | 10 | 11 |
| | Crockmeter/PMMA | 38 | 36 | 32 | 31 | 31 | 22 | 14 | 18 | 28 | 15 | 22 | 13 | 14 |

**Table 6: Results of multilayer coatings with different clear coats**

| | | **Inventive Clear Coat Materials ICC13 to ICC21 and Comparative Clear Coat Material CCC2** | | | | | | | | | |
|---|---|---|---|---|---|---|---|---|---|---|---|
| | | **CCC2** | **ICC13** | **ICC14** | **ICC15** | **ICC16** | **ICC17** | **ICC18** | **ICC19** | **ICC20** | **ICC21** |
| **Base Clearcoat B** | | 100 | 85.05 | 81.10 | 74.45 | 85.05 | 81.10 | 74.45 | 85.05 | 81.10 | 74.45 |
| **E4** | | | 3.05 | 6.00 | 10.60 | | | | | | |
| **E5** | | | | | | 3.05 | 6.00 | 10.60 | | | |
| E6 | | | | | | | | | 3.05 | 6.00 | 10.60 |
| **SN 165/185** | | 10.70 | 11.90 | 13.05 | 14.95 | 11.90 | 13.05 | 14.95 | 11.90 | 13.05 | 14.95 |
| **Gloss** | Initial Gloss 60° [%] | 95 | 95 | 95 | 96 | 95 | 96 | 95 | 95 | 96 | 96 |
| | Residual Gloss 60° [%] | 62 | 71 | 85 | 84 | 80 | 76 | 83 | 64 | 81 | 70 |
| | Δ Gloss 60° | 34 | 25 | 11 | 12 | 16 | 20 | 18 | 30 | 14 | 25 |
| | Crockmeter/PMMA | 43 | 34 | 20 | 21 | 25 | 29 | 28 | 40 | 24 | 35 |

As indicated in **Tables 5 and 6,** all multilayer coatings obtained from the Inventive Examples retain a better residual gloss after carrying out the crockmeter test, when compared with the respective comparative examples CCC1 and CCC2 not comprising any of the crosslinking agents (X).

Furthermore, as indicated in **Table 5,** the series of multilayer coatings CCC1 and ICC1 to ICC12 obtained from the clearcoats comprising base-formula A show, that the retention of the residual gloss after carrying out the crockmeter test is higher with an increasing amount of crosslinking agents (X). Comparison of the residual gloss of ICC4 to ICC9 with ICC1 to ICC3 further indicates, that addition of DMP as blocking agent has a further beneficial effect on the residual gloss in HDI-trimer based compositions, while an even better performance has been obtained for ICC10 to ICC12 comprising crosslinking agent E7.

In **Table 6,** if comparing ICC16 to ICC18 with ICC19 to ICC20 it is shown that an increasing molar amount of the blocking agent, i.e., a decreasing amount of aminosilane groups is less preferred with respect to the scratch resistance. This is effect is herein attributed to the presence of cycloaliphatic moieties of the IPDI structure, which is partially present in the crosslinkers used in the afore-mentioned examples. In case of linear aliphatic moieties, as present in HDI and thus in the crosslinker used in examples ICC13 to ICC15 the presence of a high molar amount of blocked isocyanate groups versa aminosilane groups seems to have less effect.

## Claims

1. A crosslinking agent (X) of general formula (I) 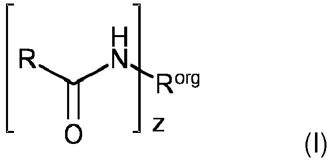 wherein
R^{org} is an organic residue and z = 2.0 to 9.0, and
R is selected from the group consisting of alkoxysilane groups containing groups of formulae (II) and (III) and isocyanate blocking groups,
formula (II) being 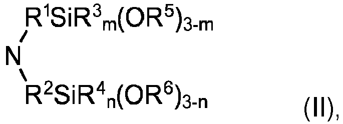 wherein
R¹ and R² are independently from each other selected from linear, branched, and cyclic alkylene groups having 1 to 10 carbon atoms,
R³ and R⁴ are independently from each other selected from linear, branched, and cyclic alkyl groups having 1 to 10 carbon atoms,
R⁵ and R⁶ are independently selected from alkyl residues containing 2, 3 or 4 carbon atoms, and
n and m are independently of each other 0, 1 or 2;
formula (III) being 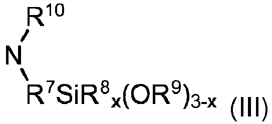 wherein
R⁷ is selected from linear, branched, and cyclic alkylene groups having 1 to 10 carbon atoms,
R⁸ is selected from linear, branched, and cyclic alkyl groups having 1 to 10 carbon atoms,
R⁹ is selected from alkyl residues containing 2, 3 or 4 carbon atoms,
R¹⁰ is selected from H and linear, branched, and cyclic alkyl groups having 1 to 10 carbon atoms and
x being 0, 1 or 2; and
isocyanate blocking groups R^{b} being formally derived from isocyanate blocking agents of formula H-R^{b} by formal removal of H at the atom of residue R^{b}, which is bound to the carbon of the C=O group in formula (I);
with the proviso that on average at least 15 mole-% of the entirety of residues R in formula (I) are residues of formula (II).

2. Crosslinking agent (X) according to claim 1, **characterized in that**
R^{org} is selected from the group consisting of monomeric organic residues R^{m}, oligomeric organic residues R^{o} and polymeric organic residues R^{P}, wherein
in case of R^{m} the value of z = 2.0 to 4.0; and
in case of R^{o} the value of z = 2.0 to 9.0; and
in case of R^{P} the value of z = 2.0 to 9.0.

3. Crosslinking agent (X) according to claim 1 or 2, **characterized in that** R^{org} is selected from the group consisting of
monomeric organic residue R^{m}, wherein R^{m} is an aliphatic or aromatic hydrocarbon residue;
oligomeric organic residues R^{o}, wherein R^{o} is the residue of an oligomerization product of one or more diisocyanates from which after oligomerization the remaining isocyanate groups are formally removed, and the oligomerization product being selected from the group consisting of dimerization products, trimerization products, urethanization products, biuretization products and allophanatization products; and
polymeric residues R^{P}, wherein residue R^{P} in the residue of an isocyanate group containing polymer from which the isocyanate groups are formally removed and the polymer containing one or more groups selected from the group consisting of polyurethane groups, polyester groups, polyether groups and polyacrylate groups.

4. Crosslinking agent (X) according to any one of claims 1 to 3, **characterized in that**
in formula (I)
z is in the range from 2.0 to 6.0;
in formula (II)
R¹ and R² are linear alkylene groups independently having 3 to 6 carbon atoms,
R³ and R⁴ are linear alkyl groups independently having 1 to 4 carbon atoms,
R⁵ and R⁶ are linear alkyl residues independently having 2 or 3 carbon atoms, and
m and n each independently being 0 or 1;
in formula (III)
R⁷ is a linear alkylene group having 3 to 6 carbon atoms,
R⁸ is a linear alkyl group having 1 to 4 carbon atoms,
R⁹ is a linear alkyl residue having 2 or 3 carbon atoms,
R¹⁰ is H or a linear alkyl group having 2 to 8 carbon atoms; and
x being 0 or 1; and
the blocking agent H-R^{b} is selected from the group consisting of oximes and pyrazoles.

5. Crosslinking agent (X) according to any one of claims 1 to 4, **characterized in that**
for each combination of
residues R¹ with R⁵,
residues R² with R⁶, and
residues R⁷ with R⁹, respectively,
the sum of carbon atoms of both residues R¹ and R⁵, R² and R⁶, and R⁷ and R⁹ respectively, is at least 4.

6. Crosslinking agent (X) according to any one or more of claims 1 to 5, **characterized in that** R^{1,} R² and R⁷ are (CH₂)₃ groups and R⁵, R⁶ and R⁹ are ethyl groups.

7. Crosslinking agent (X) according to any one or more of claims 1 to 6, **characterized in that**, n, m and x are 0 or 1.

8. Crosslinking agent (X) according to any one or more of claims 1 to 7, **characterized in that** the isocyanate blocking agent of formula H-R^{b} is selected from the group consisting of oximes and pyrazoles.

9. Crosslinking agent (X) according to any one or more or claims 1 to 8, **characterized in that** the molar percentage ranges of the entirety of residues R in the crosslinking agent (X) are as follows:
15 to 100 mole-% are residues of formula (II);
0 to 50 mole-% are residues of formula (III); and
0 to 85 mole-% are isocyanate blocking groups.

10. Crosslinking agent (X) according to any one or more of claims 1 to 9, **characterized in that**
in case R^{org} is a residue which contains one or more cycloaliphatic moieties of cycloaliphatic moiety containing diisocyanates, the molar percentage ranges of the entirety of residues R in the crosslinking agent (X) are as follows:
20 to 100 mole-% are residues of formula (II),
0 to 10 mole-% are residues of formula (III), and
0 to 80 mole-% are isocyanate blocking groups; and
in case R^{org} is a residue which contains no cycloaliphatic moieties of cycloaliphatic moiety containing diisocyanates, but linear aliphatic moieties of linear aliphatic moiety containing diisocyanates, the molar percentage ranges of the entirety of residues R in the crosslinking agent (X) are as follows:
20 to 90 mole-% are residues of formula (II),
0 to 10 mole-% are residues of formula (III), and
10 to 80 mole-%, are isocyanate blocking groups.

11. Crosslinking agent (X) according to any one or more of claims 1 to 10, **characterized in that** the content of NCO groups does not exceed 1.0 wt.-%, based on the total weight of the crosslinking agent (X).

12. A method of preparing the crosslinking agent (X) as defined in any one of claims 1 to 11 by reacting di- or polyisocyanates of formula R^{org}(NCO)_{z}, wherein R^{org} and z are defined as in any one or more of claims 1 to 11, with
i. at least one secondary amine of formula (IIa): 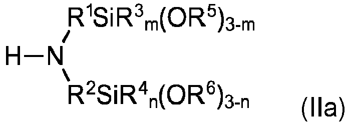 wherein R¹, R², R³, R⁴, R⁵, R⁶, m and n are defined as in any one or more of claims 1 to 11;
and in case that not all of the z isocyanate groups are reacted with a secondary amine of formula (IIa), the residual isocyanate groups are reacted with
ii. at least one amine of formula (IIIa): 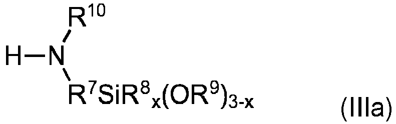 wherein R⁷, R⁸, R⁹, R¹⁰ and x are defined as in any one or more of claims 1 to 11; and/or with
iii. at least one isocyanate blocking agent H-R^{b} as defined in any one or more of claims 1 to 11,
with the proviso that on average at least 15 mole-% of the entirety of the z isocyanate groups of the diisocyanates or polyisocyanates of formula R^{org}(NCO)_{z} are reacted with compounds of formula (IIa).

13. Method of preparing the crosslinking agent (X) according to claim 12, **characterized in that** R¹, R², R⁵, R⁶, R⁷ and R⁹ are defined as in claim 6; n, m and x are defined as in claim 7; and R³, R⁴, R⁸ and R¹⁰ are defined as in claim 1.

14. Method of preparing the crosslinking agent (X) according to claim 12 or 13, **characterized in that** the reaction is carried out
without a solvent or in the presence of an aprotic solvent, wherein the ingredients are soluble; at a temperature of not more than 100 °C; and
the i. secondary amine of formula (IIa), and the optional ii. amine of formula (IIIa) and/or the optional iii. isocyanate blocking agent being employed in the reaction with R^{org}(NCO)_{z}, wherein R^{org} and z being defined as in claim 12, in a stochiometric amount allowing conversion of all isocyanate groups originally present in R^{org}(NCO)_{z}.

15. Use of the crosslinking agents (X) as defined in any one or more of claims 1 to 11 in curable compositions comprising substances which are reactive with hydrolysable silane groups.
